# EUROPEAN PATENT SPECIFICATION

(11) **EP 1 416 814 B1**
(45) Date of publication and mention of the grant of the patent: **06.12.2006**
(21) Application number: 02753961.8
(22) Date of filing: 15.08.2002
(51) Int. Cl.: A23L 1/315

(54) **METHOD OF PROCESSING SWIMMING POULTRY LIVER**
VERFAHREN ZUR VERARBEITUNG VON GEFLÜGELLEBER
PROCEDE DE TRAITEMENT DE FOIES DE VOLAILLES AQUATIQUES ET UTILISATION DES FOIES AINSI PRODUITS

(30) Priority: 21.09.2001 BG 10593701
(43) Date of publication of application: 12.05.2004
(73) Proprietor: "PTIZEKLANIZA-COUBRA" LTD, Iambol (BG)
(72) Inventor: NIKOLOV, Mario Alexiev, Sofia 1421 (BG); NIKOLOV, Petar Alexiev, Sofia 1619 (BG)
(74) Representative: Chitakova, Ekaterina Tzvetanova
(86) International application number: PCT/BG2002/000022
(87) International publication number: WO 2003/024247

(56) References cited:
- FR-A- 2 649 864
- DATABASE WPI Section Ch, Week 200175 Derwent Publications Ltd., London, GB; Class D12, AN 2000-545533 XP002239959 -& HU 220 001 B (SCHWEIGERT L), 29 October 2001 (2001-10-29)
- BONNEAU C.: "Le foie gras d'hier , d'aujourd'hui , de demain" VIANDES ET PRODUITS CARNES, vol. 16, no. 3, 1995, pages 97-100, XP008016651
- SERRES H. ; CAPITAINE P.: "Note sur un élévage d'oies des Landes avec essais de production de foies gras à Madagascar" REVUE D'ELEVAGE ET DE MEDECINE VETERINAIRE DES PAYS TROPICAUX, vol. 23, no. 3, 1970, pages 361-387, XP008016650
- HORNIK L.: "Surgélation du foie gras à l'azote liquide" REVUE GENERALE DU FROID, vol. 66, no. 2, 1975, pages 145-151, XP008016645

## Description

### FIELD OF THE INVENTION

The invention relates to a method of swimming poultry liver processing to be applied in the food industry and especially in industrial processing and preparation for use in different kinds of food, preservation and direct sale and consumption of such liver of delicious taste.

Based on a new combination of operations and means for preservation of food well-known in the food industry, this method ensures a durable preservation of the warm liver taken intact out of the swimming poultry just killed so that, after processing it remains as fresh as the just taken out one.

### PRIOR ART

A method is known of processing of liver or products obtained on the basis of liver, where liver is submitted to a pressure higher than 10Pa and specifically 2X 10 to 15 x 10 Pa approximately, the cycle including two or more consecutive but intermittent compressions and the processing being carried out either without heating at temperatures close to the environmental one or by cooling the liver down to 10C or by heating it up to 110-120C. The method is applied for a period of less than 2 hours and namely 5 to 45 minutes at a temperature of 0C to 25C. (PCT/FR94/00381)

A method is known of production of food on the basis of liver where 0.5 to 1.5, preferably 1 part by weight, of lean poultry liver, 3.3 to 4.5, preferably 4 parts by weight of fatty goose or duck liver, preferably duck liver, 0.15 to 0.3, preferably 0.2 parts by weight of protein binder, are mixed in a meat-mixer, the lean liver being finely minced in advance and mixed with a fine paste of fatty liver. The mix thus obtained is home genized at such a speed of mincing as to make a soft paste of a color slightly darker than the initial mix. Then spices and protein binder care added while mixing is maintained at the same speed for a certain period of time so that a homogeneous paste of a color slightly darker than the liver, but smooth and glossy, is obtained. Next the paste obtained is cooked for a certain period of time at such temperatures that the temperature in the middle of the product is between 65 and 80 C, preferably 72C or 75 C. The food thus produced represents entire livers and/or liver in small pieces and/or a mess to which it is possible to add spices and/or preservatives and/or truffles. The product thus obtained is food containing liver, e.g. white blood-pudding, pates or ready meals (FR 2681511).

A method is known of tinning goose liver in metal cans, such method preserving the taste of fresh cooked liver and according to which liver veins are removed, then spices are added and liver is wrapped into lard and moulded into a shape similar to that of the can by means of plates pressed on the lard by means of a cloth wrapping the lard and the plates and a special butchery string. After removing the latter, the liver is put into the can, then liquid jelly is poured on so that it cover the product totally during the subsequent cooling, and after sealing the can it is heated to a temperature of the order of 80C for about 120 min. for cans of volume about 1700 cm. After cooling the can, it is placed in a fridge at a temperature between 1C and 4C for a period of 6 months at least before to be distributed for sale and consumption. The broth for liver cooking represents vegetable jelly or meat soup spiced with porto. (FR 2530420).

A method of processing, preparation and preservation of swimming poultry liver is known where liver is taken out of the poultry killed and cooled in advance in a cooled premise and characterized by that the liver is taken out of the poultry cooled in advance down to 2-4C through the abdominal skin cut at an environmental temperature up to 12C maximum, the internal fat, the gall-bladder, the curdled blood and the veins are removed, the liver is washed, its quality is established and it is sorted by quality. After this processing of the liver cooled in advance is over, the liver is packed in multilayer foil under vacuum and then frozen.

A method is known of liver processing where the liver is removed still warm from the animal killed within 6 hours after killing, then it is sorted, packed in foil and put among layers of ice for about 24 hours. ( FR 264 9864)

A disadvantage of this method is the long period of time during which the liver is left before it is cooled in ice and the long period of cooling in ice which can worsen its taste and raise the cost of the technological process.

A use of goose liver from which the veins have been partly removed is known for production of food containing goose liver where the food mass is further processed with heat and contains a homogenized mess of goose liver from which half its veins have been removed and parts of the same goose liver from which half its veins have been removed. (HU(B) 220001; WPi-Document AN: 2000-545533 [50])

### SUMMARY OF THE INVENTION

The purpose of the invention is to establish a method of processing, preparation and preservation of goose or duck live- allowing to preserve its physiological integrity, protein cells, low melting properties a id taste by a rapid and efficient processing and storage in suitable conditions.

The invention consists in establishing a method of processing swimming poultry liver where is removed still warm from the poultry killed, then it is processed, this processing consisting of its sorting, packing into foil and cooling. Liver is to be taken out of the poultry killed, when its internal temperature is within 39-41C and after abdominal skin has been carefully cut, then the gall-bladder is removed, next the liver is washed, its quality established, it is sorted by quality and it is put into a cooling chamber for rapid cooling at a temperature of - 18C for 15-20 min. until liver internal temperature drops down to 14-19 C for duck liver and 16-23C for goose liver, and finally the veins are removed from the liver at environmental temperature of up to 12 C maximum.

After the processing is over, the liver is packed in multilayer foil under vacuum, frozen in an accelerated freezing tunnel by means of liquid nitrogen or CO2 (carbon dioxide) at a temperature from minus 40C to minus 80C and specifically minus 60C.

It is possible to preserve the liver thus processed in a gas medium containing 15-45% of CO2 and 55-85% of nitrogen for a period of time of up to 45 days max.

The complete cycle of liver processing from its removal from the killed poultry to its freezing by means of liquid nitrogen should not exceed a period of time from 15 min. to one hour and a half and especially 45 min. liver is washed, its quality established, it is sorted by quality and it is put into a cooling chamber for rapid cooling at a temperature of - 18C for 15-20 min. until liver internal temperature drops down to 14-19 C for duck liver and 16-23C for goose liver, and finally the veins are removed from the liver at environmental temperature of up to 12 C maximum.

After the processing is over, the liver is packed in multilayer foil under vacuum, frozen in an accelerated freezing tunnel by means of liquid nitrogen or CO2 (carbon dioxide) at a temperature from minus 40C to minus 80C and specifically minus 60C.

It is possible to preserve the liver thus processed in a gas medium containing 15-45% of CO2 and 55-85% of nitrogen for a period of time of up to 45 days max.

The complete cycle of liver processing from its removal from the killed poultry to its freezing by means of liquid nitrogen should not exceed a period of time from 15 min. to one hour and a half and especially 45 min.

55-75% by weight of the freshly frozen liver from which the veins have been removed are additionally processed in a cutter where are added: 1-3% by weight of a mixture of nitrite table-salt, 1-5% by weight of spices, 1-3% by weight of anti-oxidants, 1-2 by weight of cognac, 1-5% by weight of additives and 15-30% by weight of icy drinking water or ice in flakes, the cutting being continued until the mixture is finely homogenized.

Freshly frozen swimming poultry liver from which the veins have been removed is used for production of delicatessen containing preserved goose or duck liver, the preserved nutritive mass of which contains 70% of homogenized raw material of freshly cooled or de-frosted goose liver from which the veins have been removed and 30% of liver cut into cubes of 8-12 mm.

The advantages of the invention are:

The liver processed according to the method under the invention retains its natural shape irrespective of the processing, since it is hard enough and during removal of its veins it is not torn or dripping.

The veins are removed in advance thus improving liver quality and reducing technological and hygienic risks.

Immediately after liver is taken out, it is submitted to an accelerated freezing in a nitrogen tunnel as a result of which protein cells and fatty globules remain intact without having been torn what is a very important conditions of obtaining high quality products in subsequent technological or culinary processing of poultry liver. By means of the method under the invention it is possible to obtain a technological production of high quality meat raw material which can be used in a subsequent industrial processing and production of different kinds of food or it can be offered as a natural product directly on the market.

According to the method under the invention the liver is taken out before the poultry killed is cut and packed what is a technological and hygienic advantage because when the liver is taken out first, the possibility of its contamination and insemination by the entrails and the gastrointestinal tract is eliminated.

The method under the invention allows to obtain, as a finished product, goose or duck liver from which the veins have been removed and which has been processed in industrial conditions in a way to preserve its taste and physiological parameters as of those of a freshly slaughtered animal.

The preparation and preservation are carried out in accordance with the high modem requirements for healthy feeding and modem conceptions of production of food.

Another advantage of the method according to the invention is the longer period during which the goose or duck liver processed is good to be consumed and which is 3 to 6 months, all liver qualities being preserved during that period. Besides, the products obtained have perfect commercial appearances and qualities.

### DETAILED DESCRIPTION

The following examples describe the invention without being limitative:

Crammed swimming poultry (geese and/or ducks) to be killed are suspended with their heads hanging down on hooks of a slaughtery conveyer, and then they are stunned by means of an electric shock of a tension of 90V for 2-3 seconds.

They are slaughtered with a knife by cutting the face branch of the carotid in the upper part of the neck next to the head, the cut being about 25 mm long. Then the poultry killed are bleeded for 2-4 minutes. The poultry killed are placed afterwards in two baths of hot water of a temperature of 63-67 C to be scalded for 3-4 minutes. Then they are plucked by two plucking machines successively. The final removal of the dove and legs (the lower part of the drumstick) is made by running the poultry killed and plucked hanging on the conveyer through a paraffin bath after which they are additionally cleaned manually. The poultry clean on the outside are submitted to a warm removal of the fatted liver after their internal temperature reaches 39-41C, when the abdominal skin is carefully cut and the liver is taken out manually by using polyethylene gloves, then the gallbladder is removed. The pieces of liver taken out are ranged by 10 in a small box, sulphated paper foil having been placed at its bottom, and taken immediately to a special hall for processing where every piece of liver is washed and weighed and, after establishing its quality, is placed in a clean boxed distributed by qualities, 10 pieces in a box. The boxes are placed on trolleys with shelves which are pushed in a cooling chamber for rapid cooling at a temperature of minus 18C for about 15-20 minutes, until liver internal temperature achieves 14-19C for duck liver and 16-23C for goose liver, then the veins are removed manually at an environmental temperature of up to 12C maximum, when attention is being paid not to tear the liver and not to deform it. The good liver cooling is a condition for the good quality of vein removal made manually by qualified workers. The liver thus processed is packed one by one or in packages of up to 4 kg in multilayer foil under vacuum, then it is frozen in an accelerated freezing tunnel by means of liquid nitrogen or CO2 at a temperature within the range of minus 40C to minus 80C and preferably at minus 60C. The period of time from the removal of the liver from the poultry killed to the moment of freezing into the tunnel should not exceed one hour and a half, the purpose being to preserve better protein cells and low melting properties of fatty liver, but the optimum period is 15-45 min.

When no technological processing (removal of veins) is provided for the warm poultry liver having been taken out, after establishing its quality and accelerated freezing it is packed one by one or in packages of up to 4 kg in multilayer foil under vacuum and rapidly frozen in a cooling tunnel or cooling hall by means of CO2 at a temperature within the range of minus 40C to minus 80C and preferably at minus 60C.

The liver thus obtained and processed packed in vacuum multilayer gas- and waterproof foil is placed into cardboard boxes and stored as follows: the deeply frozen one-in cooling chambers at a temperature of minus 18C maximum and air relative humidity of 85-90% up to 6 months from the date of production and the cooled liver-in cooling halls at a temperature of 0C to minus 4C and air relative humidity of 75-80% up to 30 days from the date of production.

The liver thus obtained and processed may be also stored in a gas medium containing 15-45% of CO2 and 55-85% of nitrogen for a period of time of 45 days maximum

### USE OF THE INVENTION

The freshly cooled goose or duck liver from crammed poultry, after removal of its veins or defrosted, as obtained after processing according to the method under the invention is used in foods: cans of block of natural goose or duck liver or block of natural goose or duck liver "mosaic" type all included in the group of sterilized meat cans.

When producing natural liver blocks, 5-55% by weight of freshly cooled poultry liver from which the veins have been removed are submitted to an additional processing in a cutter. During this processing 55-75% by weight of the freshly cooled poultry liver from which the veins have been removed are added together with 1-3% by weight of a mixture of nitrite table-salt, 1-5% by weight of spices, 1-3% by weight of anti-oxidants, 1-2% by weight of cognac, 1-5% by weight of additives and 15-30% by weight of icy drinking water or ice in flakes, the cutting being carried out until the mixture is finely homogenized. After cutting is over, the liver mass is delivered mechanically to the hopper of a micro cutter or a colloid mill where it is finely smashed and homogenized and from where it is delivered to an automatic weighing and filling device of the line FKF. Weighing and filling may be also carried out by a filling machine having a standard proportioning device.

A second application of the invention is when swimming poultry liver processed according to the method under the invention is used in the product "block of natural liver mosaic type" in which 70% of homogenized raw material representing freshly cooled liver from which the veins have been removed or de-frosted liver are mixed with 30% of liver cut into cubes of 8 to 12mm. The 70% of the goose or duck liver from which the veins have been removed to be used in this products have been processed in a cutter. During cutting table-salt, sodium nitrite, emulsifier, gelatin, spices or a mixture of flavours, anti-oxidants, cognac, additives and icy drinking water or ice in flakes are to be added according to the recipe in quantities provided for 100 kg of mass to be filled. The cutting continues until fine homogenizing is obtained. The 30% of the almost frozen liver from which the veins have been removed in advance and which represents big entire pieces are added to the cutter. They are cut into small pieces of 5-8 mm and the mass to be filled is mixed at the same time until all ingredients are uniformly distributed and a "mosaic" is obtained. Standard proportioning and filling machines are used to produce this kind of food. The mass is filled in special 140g metal cans of a diameter of 73 mm or 200g metal cans of a diameter of 93 mm washed in advance with steam or hot water. The cans are made of tin-plated steel sheets coated with oil-and acid-resistant gold varnish, the lateral seam being mechanically drawn or electrochemically sealed and varnished additionally which is one of the factors ensuring a long preservation of the cans. The cans filled are delivered mechanically to automatic closing machines having a marker to make different inscriptions on the covers or closing machines type TEMP using covers marked in advance. The cans sealed are washed with warm water, they are checked after that and every can that is not sealed well is rejected. The cans are sterilized in autoclaves thereafter. When the sterilization in such autoclaves is over, the cans are dried, cleaned and coated with a neutral anti-oxidant grease. They are stored in storehouses or packed in corrugated board cartons suitable for transportation. A label containing the relevant data is sticked on every carton. The cans can remain in storehouses at a temperature of 0-15C and air relative humidity of 75-80% for 48 months after the date of production.

## Claims

1. A method of processing swimming poultry liver according to which the liver is taken out of the poultry killed while warm and processed thereafter, this processing representing its sorting, packing in foil and cooling, **characterized by** taking out the liver of the poultry killed at a temperature within 39-41C, after having carefully cut the abdominal skin of the bird and removed the gall-bladder, washing and weighing it, establishing its quality, ranging it by quality and placing it in a cooling chamber for rapid cooling at a temperature of minus 18C for 15-20 minutes until liver internal temperature falls down to 14-19C in case of duck liver and 16-23C in case of goose liver and subsequent removal of liver veins at an environmental temperature not higher than 12C.

2. A method according to Claim 1 above, **characterized by** packing the liver processed from which the veins have been removed in multilayer foil under vacuum, the packages being frozen in an accelerated freezing tunnel by means of liquid nitrogen or CO2 at a temperature within the range of minus 40C to minus 80C and preferably minus 60C.

3. A method according to Claim 1 and 2 above, **characterized by** preserving the liver thus processed in a gas medium containing 15-45% of CO2 and 55-85% of nitrogen for a maximum period of time of 45 days.

4. A method according to Claim 1 above, **characterized by** that the complete cycle of liver processing from liver taking out of the bird killed to its freezing by means of liquid nitrogen does not exceed a period of time within the range of 15 minutes to one hour and a half and specifically 45 minutes.

5. A method according to Claim 1,2 and 3 above, **characterized by** that 55-75% by weight of the freshly frozen poultry liver from which the veins have been removed are submitted to additional processing in a cutter when 1-3% by weight of a mixture of table-salt, 1-5% by weight of spices, 1-3% by weight of anti-oxidants, 1-2% by weight of cognac, 1-5% by weight of additives and 15-30% by weight of icy drinking water or ice in flakes are added, the cutting continuing until the mixture is finely homogenized.

6. Use of the freshly cooled swimming poultry liver from which the veins have been removed for production of delicatessen containing preserved goose or duck liver, the preserved mass containing 70% of homogenized raw material representing freshly cooled or de-frosted goose or duck liver from which the veins have been removed and 30% of liver cut into 8-12 mm cubes.

## Patentansprüche

1. Verfahren zur Verarbeitung von Geflügelleber, bei dem die Leber während sie noch warm ist vom getöteten Geflügel herausgenommen und danach bearbeitet wird, dieses Verfahren besteht in Sortierung , Verpackung in Folie und Kühlen, charakterisiert durch Herausnehmen der Leber aus dem getöteten Geflügel bei einer Temperatur bis 39 - 41 C, nachdem die Bauchhaut des Vogels aufmerfksam geschnitten und die Galle entfernt ist, Waschen und Wiegen, Qualifizieren, Einordnung je nach Qualität und Reingabe in einer Kühlkammer für schnelles Kühlen bei Temperatur von -18 C für 15-20 Minuten bis die innere Temperatur der Leber bis 14-19 C im Falle von Entenleber und bis 16-23C im Falle von Gansleber fällt und durch danach folgendem Entfernen von den Leberadern bei einer Temperatur des Außenmilieus nicht höher als 12 C.

2. Methode entsprechend dem Anspruch 1 oben charakterisiert durch Packen der bearbeiteten Leber, von der die Adern entfernt wurden, in Mehrschichtfolie unter Vakuum, Einfrieren der Verpackungen in einem Schockkühltunnel durch flüßigem Stickstoff oder CO2 bei einer Tenperatur im Rahmen von - 40 bis - 80 C und empfehlenswert - 60 C.

3. Methode entsprechend der Ausprüche 1 und 2 oben, charakterisiert durch Konservieren der Leber durch Verarbeitung in Gasmilieu, das 15-45% CO2 und 55- 85% Stickstoff enthält, für eine maximale Zeitperiode von 45 Tagen.

4. Methode entsprechend dem Auspruch 1 oben charakterisiert **dadurch**, daß der ganze Zyklus der Leberbearbeitung vom Herausnehmen der Leber aus dem getöteten Vogel bis zu seinem Einfrieren durch flüßigem Stickstoff eine Zeitperiode innerhalb von 15 Minuten bis eineinhab Stunden, und spezieller 45 Minuten, nicht überschreitet.

5. Methode entsprechend der Ausprüche 1,2 und 3 oben, charakterisiert **dadurch**, daß 55-75% vom Gewicht der frisch gekühlten Geflügelleber, aus der die Adern entfernt werden in einem Cutter zusätzlich bearbeitet werden, wobei 1-3 Gewichtprozente Kochsalz, 1-5 Gewichtprozente Gewürze, 1-3 Gewichtprozente Kognak, 1-5 Gewichtprozente Additive und 15-30% Gewichtprozente eiskaltes Trinkwasser oder dünne Eisstückchen zugegeben werden, das Schneiden dauert bis die Mischung fein homogenisiert wird.

6. Gebrauch von frish gekühlter Leber von schwimmendem Geflügel, aus der die Adern herausgenommen wurden, für Produktion von Delikatessen, die konservierte Gans- oder Entenleber enthalten, wobei die konservierte Masse 70% homogene Rohstoffe enthält, die aus frish gekühlter oder aufgetauter Gans - oder Entenleber bestehen, von der die Adern entfernt werden, und 30% Leber in 8-12 mm Würfeln geschnitten.

## Revendications

1. Un procédé de traitement de foie de volailles aquatiques selon lequel le foie est prelevé de la volaille à chaud et ensuite traité, trié, empaqueté dans un matériau en feuilles et refroidi, **caractérisé en ce**ci que le foie est prélevé à une température à l'intérieur du corps de la volaille dans l'intervalle de 39°C à 41°C après avoir coupé attentivement la cavité abdominale du corps, ensuite la vésicule biliaire est enlevée, le foie est lavé, pesé, trié par qualités et mis dans une chambre froide à surgélation rapide à une température de -18°C pour 15 - 20 minutes jusqu'à ce que la température à coeur du foie atteigne l'intervalle de 14°C à 19°C en cas de foie de canard et de 16°C à 23°C en cas de foie d'oies, après quoi le foie est dénervé à une température ambiante de 12°C max.

2. Un procédé selon la revendication 1 ci-dessus **caractérisé en ce**ci que le foie dénervé est empaqueté sous vide, après traitement, dans un matériau en feuille à plusieurs couches et ensuite surgelé dans un tunnel de surgélation rapide à azote liquide ou dioxide de carbone dans l'intervalle de - 40°C à -80°C et plus spécialement -60°C.

3. Un procédé selon les revendications 1 et 2 ci-dessus **caractérisé en ce**ci que le foie traité est conservé dans un milieu gazeux contenant de 15 à 45% de dioxide de carbone et de 55 à 85% d'azote pour une période de temps jusqu'à 45 jours.

4. Un procédé selon la revendication 1 ci-dessus **caractérisé en ce**ci que le cycle complet de traitement du foie depuis son prélèvement du corps de la volaille jusqu'à sa congélation à azote liquide ne dépasse pas l'intervalle de 15 minutes à une heure et demie et plus spécialement 45 minutes.

5. Un procédé selon les revendications 1, 2 et 3 ci-dessus **caractérisé en ce**ci que 55 -75% en poids de foie de volailles frais dénervé et refroidi sont soumis à un traitement complémentaire par un hachoir, en y ajoutant, au cours du hachage 1 - 3% en poids de selcommum de nitrite,1 - 5% en poids d'épices, 1 - 3% en poids d'antioxydants, 1-2% en poids de cognac, 1 - 5% en poids d'additifs et 15 - 30% en poids d'eau glacée ou de glace en flocons, le hachage continuant jusqu'à l'homogénéisation fine du mélange.

6. Utilisation de foie de volailles aquatiques frais dénervé et refroidi pour la production d'une délicatesse contenant du foie conservé d'oies ou de canards, la masse conservée contenant 70% d'une matière première homogénéisée qui représente du foie dénervé frais refroidi ou décongelé d'oies et 30% de foie haché en cubes de 8 à 12 mm.
